(19) Europäisches Patentamt
European Patent Office
Office européen des brevets

(11) **EP 4 629 163 A1**

(12) **EUROPEAN PATENT APPLICATION**

(43) Date of publication:
**08.10.2025 Bulletin 2025/41**

(21) Application number: **24305542.3**

(22) Date of filing: **05.04.2024**

(51) International Patent Classification (IPC):
**G06T 3/14** *(2024.01)*

(52) Cooperative Patent Classification (CPC):
**G06T 3/14**; G06T 2207/30196

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **COVA REGATEIRO, João Pedro**
  **35220 CHATEAUBOURG (FR)**

• **GOSSELIN, Philippe Henri**
  **35235 THORIGNE-FOUILLARD (FR)**
• **LE CLERC, Francois**
  **35590 L'HERMITAGE (FR)**
• **AVRIL, Quentin**
  **35830 BETTON (FR)**
• **GUILLOTEL, Philippe**
  **35770 VERN SUR SEICHE (FR)**

(74) Representative: **Vossius & Partner Patentanwälte Rechtsanwälte mbB Siebertstraße 3 81675 München (DE)**

(54) **AVATAR MAPPING USING A GENERIC REGISTRATION SCHEMA**

(57) The system, method and device described herein is directed to the registration/mapping between different avatar representations including shape (e.g., vertices and/or faces, etc.) and semantics (e.g., skeletal joints, shape annotation). The system, method and device include a generic schema to map two different avatar representations. Such a mapping may allow, for example, motion retargeting, blendshape animation retargeting, semantic transfer of body parts annotations and/or attachment points of accessories.

FIG. 6

**Description**

**BACKGROUND**

The current contributions in MPEG for the signaling of mesh correspondences permit the use of a shadow mesh to map onto a given volumetric captured mesh. Such signaling is standardized in the "MPEG_mesh_linking" extension of the MPEG Immersive Scene Description standard (MPEG-I SD), published in the document titled ISO/IEC 23090-14:2023 Information technology Coded representation of immersive media Part 14: Scene description. This technology permits the animation of a volumetric mesh (dependent mesh) given the animation of a secondary mesh input (shadow mesh).

**SUMMARY**

The system, method and device described herein is directed to the registration/mapping between different avatar representations including shape (e.g., vertices and/or faces, etc.) and semantics (e.g., skeletal joints, shape annotation). The system, method and device include a generic schema to map different avatar representations. Such a mapping may allow, for example, motion retargeting, blendshape animation retargeting, semantic transfer of body parts annotations and/or attachment points of accessories.

**BRIEF DESCRIPTION OF THE DRAWINGS**

A more detailed understanding may be had from the following description, given by way of example in conjunction with the accompanying drawings, wherein like reference numerals in the figures indicate like elements, and wherein:

FIG. 1 illustrates the mesh linking between the dependent mesh (left) and the shadow mesh (right);

FIG. 2 illustrates the signaling of mappings between two avatars;

FIG. 3: illustrates the mapping between the meshes of two avatars;

FIG. 4 illustrates a mapping between the joint skeletons of two avatars;

FIG. 5 illustrates the correspondence on Avatar_B of a vertex of avatar_A;

FIG. 6 illustrates the mappings between the elements of the buffer representing vertices of Avatar_A ("Vertices Buffer") and the elements representing the faces of Avatar_B ("Polygons Buffer");

FIG. 7 illustrates a method for parsing of the geometric mappings of the MPEG_avatar_mapping extension;

FIG. 8 illustrates a method for parsing of the skeletal mappings of the MPEG_avatar_mapping extension;

FIG. 9 illustrates a method for parsing of the blendshape mappings of the MPEG_avatar_mapping extension;

FIG. 10 illustrates a method for parsing the keypoints mapping of the MPEG_avatar_mapping extension; and

FIG. 11 illustrates the use of the "MPEG_avatar_mapping" extension in three different avatar representation formats.

**DETAILED DESCRIPTION**

The system, method and device described herein is directed to the registration/mapping between different avatar representations including shape (e.g., vertices and/or faces, etc.) and semantics (e.g., skeletal joints, shape annotation). The system, method and device include a generic schema to map different avatar representations. Such a mapping may allow, for example, motion retargeting, blendshape animation retargeting, semantic transfer of body parts annotations and/or attachment points of accessories.

The current contributions in MPEG for the signaling of mesh correspondences permit the use of a shadow mesh to map onto a given volumetric captured mesh. Such signaling is standardized in the "MPEG_mesh_linking" extension of the MPEG Immersive Scene Description standard (MPEG-I SD), published in the document titled ISO/IEC 23090-14:2023 Information technology Coded representation of immersive media Part 14: Scene description. This technology permits the animation of a volumetric mesh (dependent mesh) given the animation of a secondary mesh input (shadow mesh).

A shadow mesh in the context of MPEG-I SD is a mesh that often has a lower resolution than the volumetric mesh. The correspondence between the two meshes is determined in such a way that each vertex of the volumetric mesh maps to a polygonal face of the shadow mesh.

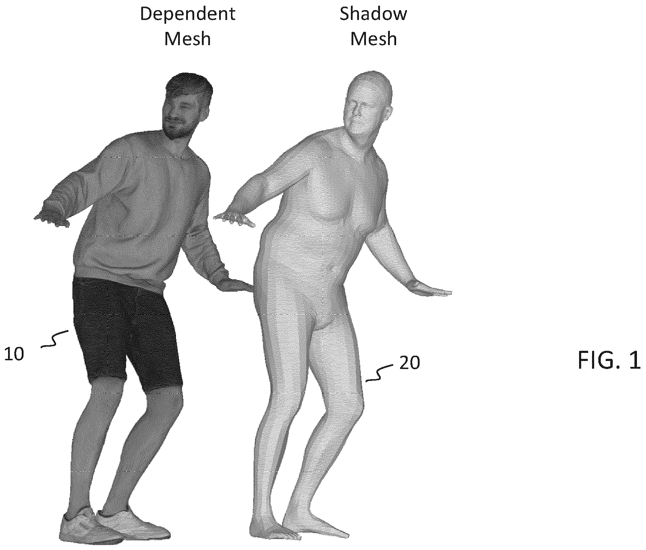

Based on the correspondence, animations of the shadow mesh may be transferred onto the dependent mesh, as illustrated on FIG. 1. FIG. 1 illustrates the mesh linking between the dependent mesh 10 and the shadow mesh 20.

In an application, the dependent mesh 10 may reproduce the motion of the shadow mesh 20 as a result of a mapping between the two. This reproduced behavior may be achieved by defining in glTF a correspondence schema, illustrated in Table 1.

Table 1 - **Definition of MPEG_mesh_linking extension in the MPEG Immersive Scene Description standard**

| Name | Type | Description |
| --- | --- | --- |
| correspondence | integer | Provides a reference to an accessor, by specifying the accessor's index in accessors array, that describes the buffer where the correspondence values between the dependent mesh and its associated shadow mesh will be made available. |
| mesh | integer | Provides a reference to the shadow mesh |
| Pose | integer | Provides a reference to an accessor, by specifying the accessor's index in accessors array, that describes the buffer where the transformation of the nodes associated to the dependent mesh will be made available. |
| weights | integer | Provides a reference to an accessor, by specifying the accessor's index in accessors array, that describes the buffer where the weights to be applied to the morph targets of the shadow mesh associated to the dependent mesh will be made available. |

The reproduced approach computes the correspondence(s) to the dependent mesh, as described in Table 1 where:

The "correspondence" specifies an index that points to an accessor in the list of accessors. The buffer to which the accessor refers to may contain the polygon index value of the shadow mesh 20 that corresponds to the dependent mesh list of vertices.

The "mesh" specifies an index that points to the shadow mesh 20 in the list of meshes of the scene description.

The "pose" specifies an index that points to an accessor in the list of accessors. The buffer to which the accessor refers to contains the transformation matrices of the nodes associated to the joints of the dependent mesh skeleton.

The "weights" specifies an index that points to an accessor in the list of accessors. The buffer to which the accessor refers to contains the weights to be applied to the morph targets of the shadow mesh 20.

An illustrative example is provided below:

```
{
"meshes": [ {
    "primitives" : [ {
      "attributes" : {
        "POSITION" : 1,
        "JOINTS_0" : 2,
        "WEIGHTS_0" : 3
      },
      "indices":0,
      "mode": 4,
      "targets" : [
                {
                  "POSITION" : 6,
                  "NORMAL" : 7
                },
                {
                  "POSITION" : 8,
                  "NORMAL" : 9
                },
```

Shadow mesh

```
                      },

              {
                    "name" : "dependent mesh",
                    "primitives":[{
                      "attributes" : {
                        "POSITION" : 5,
          . . .
          . . .

                      },
                    "extensions":[
                      "MPEG_mesh_linking ": {
                        {
                          "correspondence": 10,
                          "mesh" : 0
                          "pose": 11,
                          "weights" : 12
                        }
                      ]
                  }
                ]
              }
```

Dependent mesh

This illustrative example contains two meshes, mesh with index 0 is the shadow mesh 20, and mesh with index 1 is the dependent mesh 10. The shadow mesh 20 holds information on the modelling of the geometrical transformations of the mesh vertices as a linear combination of the geometrical transformations of skeletal joints ("JOINTS_0" and "WEIGHTS_0"). The shadow mesh 20 contains two morph targets ("targets") for modelling predetermined mesh deformations during skeletal animation. The dependent mesh 10 implements the "MPEG_mesh_linking" extension which includes the "correspondences", "mesh", "pose" and "weights" attributes described in Table 1.

The described technique may be limited to a mesh representation and, generally, does not include more complex representations, such as avatars, whose description include additional properties, some of which related to semantic attributes. The correspondences need to be determined for every frame of the dependent mesh and provide limited animation capabilities, e.g., skeletal animation through joint transformation. The transfer of a pose between shadow mesh 20 and dependent mesh 10 is performed via the computation of the relative distance between vertices on the dependent mesh 10 for every animation frame of the shadow mesh 20. The dependent mesh 10 projection onto the shadow mesh 20 manifold may be computed offline and, as a result, prediction of the relative displacement of every vertex of the dependent mesh 10 given a sequence of joint transformation matrices of the shadow mesh 20. This is computationally expensive, as it is necessary to compute the residual displacements for every frame.

An avatar representation can take many forms and is not limited to a single mesh, the following properties illustrate an example of how to represent an avatar using high-level avatar information, low-level avatar information, static geometry and texture model, skeleton skin and wardrobe skin. The high-level avatar information may include Name, Age and Gender, for example. The low-level avatar information may include body part mappings, skeletons and wardrobe, for example. The static geometry and texture model may include vertices, faces, normals, blendshapes, and textures, for example. A skeleton skin may include a list of joints position, hierarchy structure and transformation matrices, and a list of skinning weights defining the attachment of mesh vertices to the skeleton bones, for example. A wardrobe skin may include a list of meshes that describe the model of an accessory of the avatar, and a list of attachment points that describe how the accessories are bound to the geometry of the avatar, for example.

In the low-level avatar information, the mappings may be a list of strings with associated geometries to identify the body parts, the skeletons may include one or more skeleton skins, as defined below, and the wardrobe may include one or more accessories, as defined below.

In the static geometry and texture model, the vertices may include a list of 3D float coordinates corresponding to vertex coordinates, the faces may include a: list of tuples, where each value in a tuple is a vertex index, the normals may include a list of 3D float coordinates corresponding to vertex normal coordinates, the blendshapes may include a list of 3D vertex displacements representing a predetermined deformation of the mesh, and the textures may include a list of texture data, each representing a texture type such as albedo, normal, roughness, specular.

The method described above partially considers the correspondence between two meshes in a unilateral way e.g., mesh A is linked to mesh B, but not the other direction, for example. Solving the problem of making correspondences between avatars in a bilateral manner requires the mapping of additional attributes, such as the avatar attributes described previously. Further, the method described above does not provide an answer to the problem of partial registration between meshes onto body regions that can serve for avatar accessories attachments (clothes, wearables, hair model etc.), or to animate isolated body parts (hands, facial expressions).

The systems, methods and devices described herein provide an example to facilitate the mapping between two avatar representations, where mapping defines the correspondence between two avatar representations, in such a manner that one can translate one onto the other and vice versa.

With the increasing demand for digital content and immersive experiments, different platforms may have their own interpretation and format of what is an immersive world and how to integrate and represent avatars. This creates an ecosystem that is flooded with formats and incompatible avatar representations. The overall problem statement across the industry is how to make avatar formats interoperable and how to signal such interoperability.

The described system, methods and devices address the problem of signaling the mapping of one avatar representation to another, with a set of schemas that allow the mapping of different avatar properties. For instance, in the case of a user represented by avatar A using an application that can handle avatars whose representation complies with a template avatar B, if the application needs some property (or feature) available in avatar B but not in avatar A, then a property mapping from A to B may allow the application to use the property of avatar A. This desirable functionality is possible if avatar A can be signaled with the property (or feature) mapping from A to B.

The described systems, methods and devices address the problem of signaling the mapping between two avatars in a generic form. Two avatars can have several properties that describe an avatar entity. This can include meshes, skeletons, semantical information or keypoints. An avatar may be decomposed into components, e.g., body parts, that each have their own properties that can or cannot be transcoded between avatar representations. Therefore, there is a need for a generic schema to allow such mapping between different avatar properties.

A system, device and method for avatar mapping using a generic registration schema is provided. The system, device and method includes a first avatar representation including a first shape and a first semantics, and a second avatar representation including a second shape and a second semantics, the second avatar representation including a registration with the first avatar representation, the registration comprising a mapping of the first shape and the first semantics to the second shape and the second semantics, the registration comprising one or more of a geometrical mapping, a skeletal mapping, a blendshape mapping and a keypoint mapping. The avatar mapping enables or improves at least one of motion retargeting, blendshape animation retargeting, semantical transfer of body parts annotations and attachment points of accessories. The registration comprises a correspondence from vertices of the first avatar representation to corresponding locations on a mesh of the second avatar representation. The registration comprising the geometrical mapping further comprises faceIndices, barycentricCoords and projectionVectors. The registration comprising the skeletal mapping further comprises joints and skinWeights. The registration comprising the blendshape mapping further comprises targets. The registration comprising the keypoint mapping further comprises keypointsA and keypointsB. The registration comprises the transfer of shape, animations or semantic information from the first avatar representation to the second avatar representation. The description of the mapping between the first avatar representation and the second avatar representation comprises an array of tuples containing two elements that refer to the indices of the nodes representing the first avatar and the second avatar in the scene description, and an array of mapping objects that comprise the above-described elements of the mapping. The array of tuples and the array of mapping objects are index-aligned. For example, the avatars pair in a first tuple (0, 1) references an avatar with index 0 and an avatar with index 1. The avatars pair in a second tuple (2, 3) references an avatar with index 2 and an avatar with index 3. A mapping_0 first element of the mappings array may for example provide the mapping from an avatar indexed with 0 to avatar indexed with 1. A mapping_1 second element of the mappings array may for example provide the mapping from an avatar indexed with 2 to avatar indexed with 3. A bilateral mapping between the above referenced avatars pairs may be obtained with an avatars array [(0,1), (1,0), (2,3), (3,2)] and a mappings array [mapping_0, mapping_1, mapping_2, mapping_3]. This array of tuples identifies the avatar pairs that are mapped within all the avatars that are referenced herein. The mapping of each avatar pair is described using faceIndices, joint, targets, and the like, properties.

A system, device and method for avatar mapping using a generic registration schema is provided. The system, device and method includes mapping between a first avatar representation format including shape and semantics into a second avatar representation format. The shape includes at least one of vertices and faces. The semantics include at least one of skeletal joints and shape annotation. In an example, the first avatar representation format may be described using a glTF 2.0 format and the second avatar representation format may be described using a VRM format. The VRM format includes vertices, joints and mappings. The mapping includes at least one determination of joint transformations and vertex displacements to be applied to a model of the second avatar in order to reproduce an animation of the first avatar. The mapping transfers joint transformation matrices from the first avatar representation format to second avatar representation format. The mapping creates a mirroring effect allowing the first avatar representation to second avatar representation to perform the same type of motions. In an example, the first avatar representation format is described using a VRM format and the second avatar representation format is described using a Haptic avatar format. The haptic avatar provides haptic feedback through physical sensors attached to a real person driving the avatar. The mapping enables at least one of motion retargeting and blendshape animation retargeting. The mapping enables semantical transfer of body parts annotations. The mapping enables attachment points of accessories.

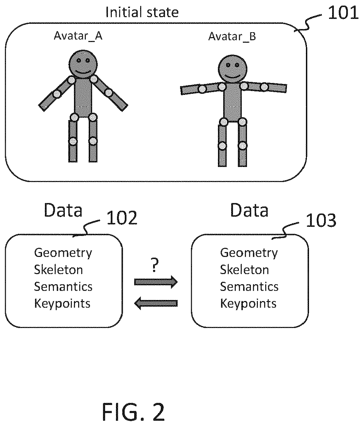

The problem of signaling the mapping between two avatars in generic form is illustrated in FIG. 2. Two avatar representations (Avatar_A, Avatar_B) in their own reference initial state 101 are provided. A data example of one avatar representation 102 is included, including, for example, geometry, skeleton, semantics and keypoints. A data example of the other avatar representation 103 is included, including, for example, geometry, skeleton, semantics and keypoints. The problem is to find a mapping between the representation data of Avatar_A 102 and the representation data of Avatar_B 103. This mapping is described in more detail below describing avatar mapping schema.

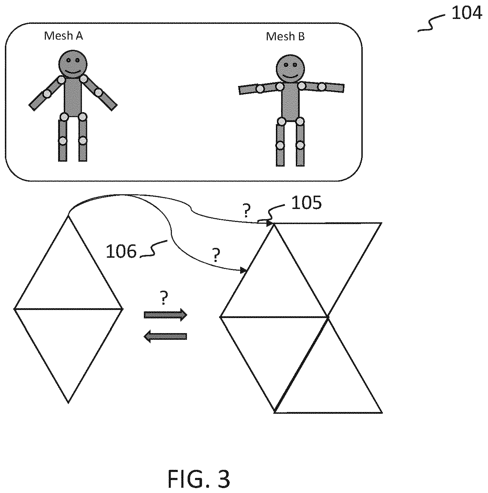

The problem of signaling the mapping between two meshes of the avatars is provided in FIG. 3. FIG. 3: illustrates the mapping between the meshes of two avatars. Two avatars each represented by a mesh (Mesh A, Mesh B) (collectively 104) can be geometrically mapped onto another. The correspondence between two meshes 104, e.g., vertex to vertex correspondence 105 or vertex to face correspondence 106, may be of benefit to map each location on the surface of mesh A to a corresponding location on the surface of mesh B. In a solution, the mapping is performed from each vertex of mesh A to a face of mesh B 106, and the index of the face of mesh B is recorded and transmitted along with the correspondence to facilitate the processing of transferring for example animations between meshes. FIG. 3 illustrates two possible mappings for a single vertex of mesh A to a corresponding face of mesh B (represented by lines with ?), and highlights the need to describe the corresponding location of the vertex of mesh A on the corresponding face of mesh B.. This mapping is described in more detail below describing geometrical mapping.

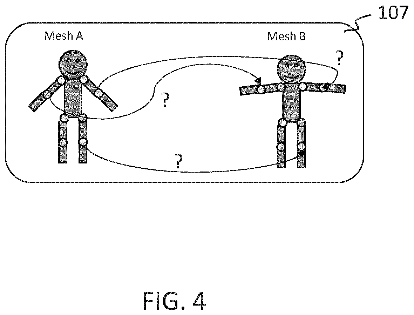

The problem of mapping two avatars with a skeletal animation rig is illustrated in FIG. 4. FIG. 4 shows a mapping between the joint skeletons of two avatars (Mesh A, Mesh B) (collectively 107). Two avatar representations 107 are illustrated in their own reference initial state. The two avatar representations 107 may contain properties describing a skeletal animation rig, such as joint positions, assignment of vertices to joints, and 3D joint transformation matrices that parameterize the animation of the skeleton. The problem is to find the corresponding joints between skeletal representations. This correspondence amounts to mapping, e.g., joint with a label "right hand" of avatar A to a corresponding joint in avatar B. Similarly, one can use the skinning information of one avatar at the vertex level to drive the animation of another avatar through mappings of the vertex to joint bindings for each avatar. Such mappings allow to reuse the skeletal animation rig of avatar A to retarget its motion to avatar B. FIG. 4 illustrates possible mappings for joints, so the problem is how to represent this mapping in an interpretable way. This mapping is described in more detail below describing skeletal mapping.

The problem of mapping two avatars with blendshape information is also provided with respect to blendshape mapping detailed below. Generally, the avatars usually have semantics for their animation parameters and/or to their geometrical shape. For example, if animations are performed using blendshapes, it is traditionally recommended to label blendshapes with a human-readable descriptor or code syntax that identifies the blendshape for other animation platforms. The blendshapes may apply only to anatomical body parts obtained from a segmentation of the avatar mesh. In this case, a mapping between body parts is also needed to facilitate the transfer of avatar representations.

The problem of mapping two avatar with keypoints is also provided with respect to landmarks mapping detailed below. Two avatars may be annotated with a set of keypoints or landmarks on the surface of the shape that can indicate additional information to be used for shape matching, blendshape transfer, or other manipulations. In this case, there needs to be a way to map such information between avatars.

Referring again to FIG. 2 that illustrates the signaling of mappings between two avatars. Two avatar representations in their own initial state 101 are provided. Data example of one avatar representation 102 is included as described above. Data example of the other avatar representation 103 is included as described above. Avatar mapping schema includes a new schema that allows two avatar representations to have a mapping table that allows matching, e.g., between avatar A and avatar B. The glTF format is utilized to explain the concept of a mapping schema between avatars but it is not exclusive to a single compression/transmission/rendering format.

**Table 2 -definition of the MPEG_avatar_mapping extension**

| Name | Type | Required | Description |
|---|---|---|---|
| mappings | Array[mapping] | Yes | An array of "mapping" objects that represent the mapping of the avatar pairs in the "avatars" property. |
| avatars | Array[Tuple(integer, integer)] | Yes | An array of tuples, where each tuple contains the indices of the two avatar nodes to be mapped by the MPEG_avatar_mapping extension. |

Table 2 introduces the "MPEG_avatar_mapping" extension of a glTF 2.0 scene description to illustrate the avatar mapping schema. The avatars are represented as an array of tuples containing two elements that refer to node indices. These nodes refer to avatar nodes that are extended by the "MPEG_node_avatar" extension in glTF 2.0. The schema that maps two avatars is provided by the "mappings" property, which must be index-aligned with the "avatars" property. This means that the $i^{th}$ element of the "mappings" array corresponds to the $i^{th}$ element of the "avatars" array. The mapping between the avatars referenced by the tuple is represented as described in the following example.

Considering the "avatars" array [(0,1), (2,3)] and the "mappings" array [mapping_0, mapping_1]:

The "avatars" pair in the first tuple (0, 1), contains references to an avatar with index 0 and an avatar with index 1. The corresponding "mapping_0" first element of the "mappings" array provides the mapping from avatar indexed with 0 to avatar indexed with 1.

The "avatars" pair in the second tuple (2, 3), contains references to an avatar with index 2 and an avatar with index 3. The corresponding "mapping_1" second element of the "mappings" array provides the mapping from avatar indexed with 2 to avatar indexed with 3.

In this example, the mappings are unilateral, i.e., directed from one avatar to another avatar. If a bilateral mapping is needed then the array may contain the corresponding extra information. Bilateral mappings for the above example may be represented using the "avatars" array [(0,1), (1,0), (2,3), (3,2)] and the "mappings" array [mapping_0, mapping_1, mapping_2, mapping_3].

The mappings may be represented as an array of objects that refer to the mapping scheme presented in Table 3, Table 4, Table 5 and Table 6. Each mapping may be unilateral and refers to the avatars referenced by their node index in the element of the "avatars" array of tuples corresponding to the considered element of "mappings".

The geometrical mapping between two avatars describes correspondence from vertices of a first avatar to corresponding locations on the mesh of the second avatar. Such correspondences may allow the transfer of shape, animations or semantic information, such as a segmentation into body parts, from one avatar representation to another. Table 3 illustrates the semantics definition of mapping for geometric attributes.

**Table 3 -Semantics definition of mapping for geometric attributes**

| Name | Type | Required | Description |
|---|---|---|---|
| faceIndices | integer | Yes | Provides a reference to an accessor. The accessor points to a buffer containing the indices of the faces of the mesh of the second avatar that are in correspondence to the vertices of the first avatar. |
| barycentricCoords | integer | Yes | Provides a reference to an accessor that contains an array of vec3 that provides the three barycentric coordinates of the correspondence point for each face in faceIndices. This assumes, for illustration purposes, that the geometry of the avatar is described by a triangular mesh. For a mesh whose faces are polygons with n vertices, weights would be represented by an array of n-tuples. |
| projectionVectors | integer | Yes | Provides a reference to an accessor that contains an array of vec3 that describes the vector from the projection of the correspondence point on its corresponding face on the mesh of the second avatar, referenced in faceIndices, to the location of the correspondence point. |

Every vertex of the mesh of the first element of the considered tuple in the "avatars" array is mapped to a face index of the second element of the tuple in the "avatars" array. The mapping is expressed in a buffer referenced by an accessor. "faceIndices" is the index of this accessor in the "accessors" array of the scene description. For correspondence between mesh parts, a sparse accessor may be used to address only the vertices of a part of a mesh.

A method for matching vertices and faces between avatars is described to address the discussion above with respect to FIG. 2. Two avatars (avatar_A and avatar_B) are provided. Each avatar is represented by a 3D mesh. It is assumed at this stage that both meshes have been through the process of aligning their pose, either manually or automatically. Avatar_A is the avatar that is extended by the "MPEG_avatar_mapping" extension. The accessor referenced in "faceIndices" refers to a buffer that contains the indices of the faces of the mesh of avatar_B. Each vertex of avatar_A is represented as $v_i^A$ with $i = [0 \ldots N^A]$, where $N^A$ is the total number of vertices of the avatar_A.

Each vertex of avatar_B is represented as $v_i^B$ with $i = [0 \ldots N^B]$, where $N^B$ is the total number of vertices of the avatar_B.

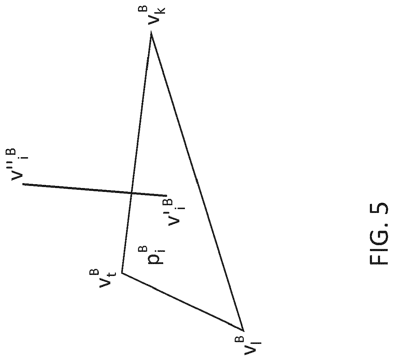

The correspondence is achieved by mapping each vertex $v_i^A$ of avatar_A to a point $v''^B_i$ whose closest polygon in the mesh of avatar_B is indexed by $p_i^B$. This correspondence is illustrated on FIG. 5. For the purpose of illustration we assume, without loss of generality, that the faces of the mesh of avatar_B are triangles. Hence, a face of the mesh of avatar_B is represented by three vertex indices $v_t^B, v_l^B$ and $v_k^B$.

The problem is that there is no guarantee that the alignment of the poses of avatar_A and avatar_B results in a corresponding point $v''^B_i$ on avatar_B of vertex $v_i^A$ of avatar_A such that $v''^B_i$ is located on the surface of avatar_B. In general, $v''^B_i$ may be located close to a corresponding polygon $p_i^B$ of the mesh of avatar_B, but at some non-zero distance to this polygon. To locate $v''^B_i$ with respect to the mesh of avatar_B it is necessary to project $v''^B_i$ onto polygon $p_i^B$. The orthogonal projection vector is defined in Equation 1:

$$n = \frac{(v_l^B - v_t^B) \times (v_k^B - v_t^B)}{||(v_l^B - v_t^B) \times (v_k^B - v_t^B)||} \qquad \text{Eq. 1,}$$

where $\times$ is the cross products between two vectors. Given that the normal vector n is constructed from the origin $v_t^B$ it is necessary to calculate the distance vector from $v_i^A$ to $v_t^B$ as ($v_t^B - v_i^A$) and project the distance along the normal n, as follows, $((v_t^B - v_i^A).n)n$. The corresponding point $v''^B_i$ to $v_i^A$ is finally projected onto the polygon surface by subtracting it to the previous equation as defined by Equation 2:

$$v'^B_i = v_i^A - ((v_t^B - v_i^A).n)n \qquad \text{Eq. 2,}$$

where, $v'^B_i$ is the projection point on polygon $p_i^B$ to $v''^B_i$. Having this information, the exact distance between $v_i^A$ and polygon $p_i^B$ is $||v_i^A - v'^B_i||$. $v'^B_i$ is conveniently converted to barycentric coordinates via Equations 3, 4 and 5:

$$v'^B_{i,u} = \frac{Area\left(v_t^B, v_l^B, v'^B_i\right)}{Area\left(v_t^B, v_l^B, v_k^B\right)} \qquad \text{Eq. 3,}$$

$$v'^B_{i,v} = \frac{Area\left(v_t^B, v_k^B, v'^B_i\right)}{Area\left(v_t^B, v_l^B, v_k^B\right)} \qquad \text{Eq. 4,}$$

$$v'^B_{i,w} = 1 - v'^B_{i,u} - v'^B_{i,v} \qquad \text{Eq. 5.}$$

The function "Area" is defined by Equation 6:

$$Area(a, b, c) = 0.5 * \left((a - c) \times (b - c)\right).n \qquad \text{Eq. 6,}$$

where n is the previously defined normal.

The determination of the corresponding points for avatar_B to every vertex of the mesh of avatar_A results in a full registration of avatar_B to avatar_A. This allows to drive the geometry of avatar_A by an animation stream of avatar_B. A corresponding point $v''^B_i$ to a vertex $v_i^A$ of avatar_A is defined by the index of the face $p_i^B$ of the mesh of avatar_B it is closest to, the barycentric coordinates of its projection $v'^B_i$ on face $p_i^B$, and the 3D vector from $v'^B_i$ to $v''^B_i$.

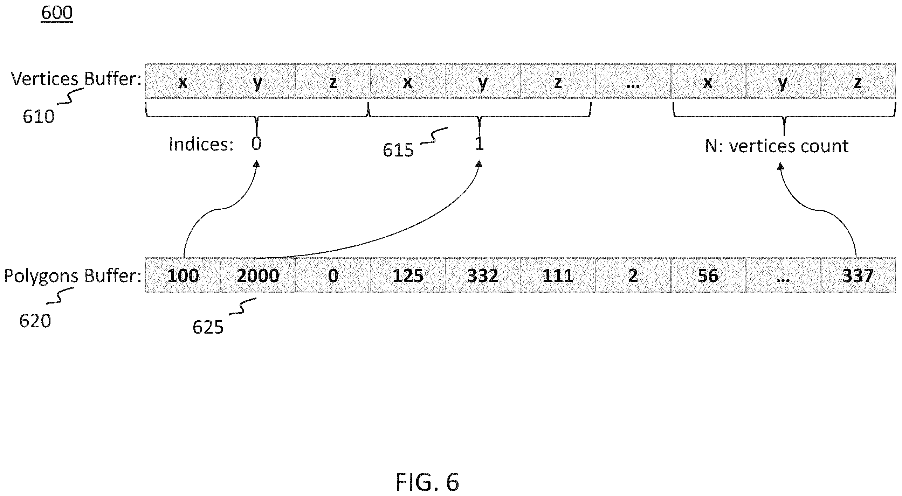

FIG. 6 illustrates a diagram 600 of the mappings between the elements of the buffer representing vertices of avatar_A ("Vertices Buffer") 610 and the elements representing the faces of avatar_B ("Polygons Buffer") 620. These mappings are described in the "faceIndices" property. A representation in terms of buffer elements of the vertex to polygon face mapping described by the "faceIndices" property is illustrated in FIG. 6. "faceIndices" maps each vertex $v_i^A$ of avatar_A to a polygon of the mesh of avatar_B that is indexed by $p_i^B$ in the array of faces of avatar_B. The N vertices of avatar_A are stored in a buffer "Vertices Buffer" 610 that has 3N elements, namely, the (X,Y,Z) coordinates of each of the N vertices. "Polygons Buffer" 620 contains the indexes of the faces of the mesh of avatar_B that correspond to each vertex in "Vertices Buffer" 610. "Polygons Buffer" 620 has N elements. For instance, the second vertex 615 of avatar_A, indexed by 1 in the "Vertices Buffer" 610, is mapped to the face indexed by 2000 625 in the mesh of avatar_B of "Polygons Buffer" 620.

Every face index referenced in the buffer pointed by the "faceIndices" accessor is associated with an array of barycentric coordinates, described in the "barycentricCoords" property of Table 3, and an array of projection vectors, described in the "projectionVectors" property of Table 3. The $i^{th}$ element of the buffers referenced by the "barycentric-Coords" and "projectionVectors" accessors refer to the corresponding location $v''^B_i$ for avatar_B of the $i^{th}$ vertex $v_i^A$ of the mesh of avatar_A. In line with the notations defined in section 4.1, and as illustrated on FIG. 5, the $i^{th}$ element of "barycentricCoords" describes the barycentric coordinates of the projection $v'^B_i$ of $v''^B_i$ on its closest face $p_i^B$ on the mesh of avatar_B. The $i^{th}$ element of "projectionVectors" describes the 3D vector from $v'^B_i$ to $v''^B_i$.

The following example considers a glTF 2.0 format using the extension "MPEG_node_avatar" as an avatar representation:

```
{
...

 "generator": "Interdigital R&D France, Video Lab, MetaVideo, Interactive Media,
Immersive teleprescence",
    "version": "2.0"

 "extensions": {
    "MPEG_avatar_mapping": {
       "mappings":[{
        "faceIndices": 19,
        "barycentricCoords": 20,
        "projectionVectors": 21
       }],
       "avatars": [(0, 1)]
    }
  },

 "bufferViews": [...],
 "buffers": [...],
 "images": [...],
 "materials": [...],
 "accessors": [...],

"meshes": [{
   "name": "avatar_A",
   "primitives": [{
    "attributes": {
     "POSITION": 0,
     "TEXCOORD_0": 2
    },
    "indices": 1,
    "material": 0
   }]
   },
   {
   "name": "avatar_B",
   "primitives": [{
    "attributes": {
       "POSITION": 3,
       "TEXCOORD_0": 5
    },
    "indices": 4,
    "material": 1
```

```
              }]
          }],

          "nodes": [
            {
              "mesh": 0,
              "extensions": {
                "MPEG_node_avatar": {
                  "type": "urn:mpeg:sd:2023:avatar",
                  "mappings": [
                    {
                      "path": "full_body/upper_body/head",
                      "node": 0
                    }, ...
                  ]
                }
              },
            },
            {
              "mesh": 1,
              "extensions": {
                "MPEG_node_avatar": {
                  "type": "urn:avatar_B",
                  "mappings": [
                    {
                      "path": "full_body/upper_body/head",
                      "node": 1
                    }, ...
                  ]
                }
              }
            }
          ]
      }
```

In this example, there are two meshes and two avatar nodes represented by the "MPEG_node_avatar" format of glTF 2.0 MPEG extension. The "MPEG_avatar_mapping" extension described herein is at the root level. The node with index zero, i.e., the first node in the "nodes" array in the example, refers to avatar "A" and the mapped avatar is named as avatar "B" and referenced as node 1, i.e., the second node in the "nodes" array. Avatar B is the target avatar to be mapped onto avatar A. The mapping is described by referencing specific accessors that contain the raw information that maps avatar A onto avatar B. In this example, the following accessor indices may be used: 19 points to the buffer holding the correspondence mapping between the vertices of avatar A and the polygons of avatar B, 20 points to the buffer holding the barycentric coordinates of the projections of the vertex correspondences on the corresponding faces of the mesh of avatar B, as described herein, and 21 points to the buffer holding the components of the 3D vectors from the projections of the vertex correspondences on the corresponding faces of the mesh of avatar B to the vertex correspondence locations, as described herein.

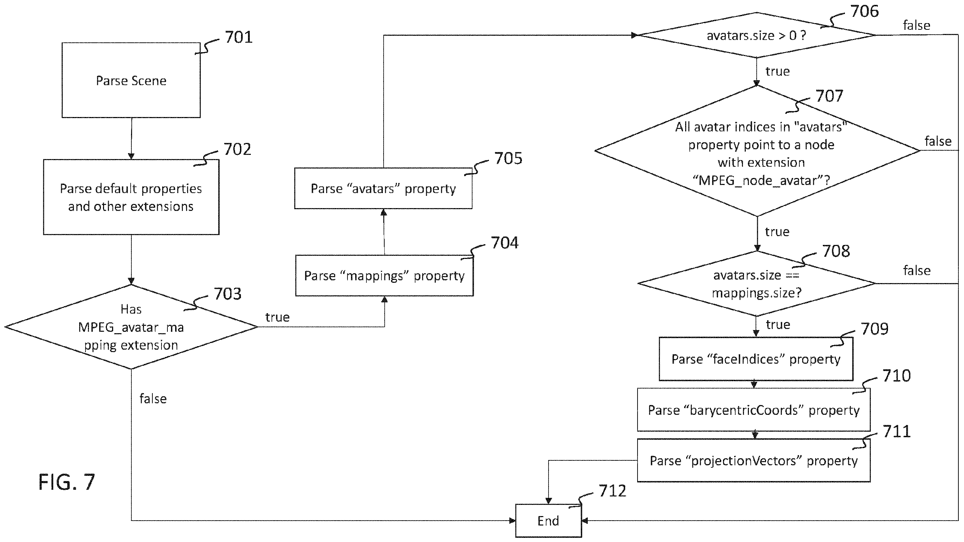

FIG. 7 illustrates a method 700 for the parsing of the geometric attributes of the mapping between two avatars with the support of the "MPEG_node_avatar" and "MPEG_avatar_mapping" extensions, assuming a glTF 2.0 description format. Method 700 begins with the parsing of a scene at 701. This process happens every time a scene is being processed in the glTF file. Method 700 continues at 702 with a parsing of the default properties and other extensions. The glTF loader first decodes the standard properties and possible extensions. At 703, method 700 includes determining if the "MPEG_avatar_mapping" is present, and if so the loader parses it, otherwise parsing ends at 712.

At 704, method 700 includes parsing the "mapping" property (mandatory, error if not present). At 705, method 700 parses the "avatars" property (mandatory, error if not present). At 706, method 700 includes determining if "avatars.size" is greater than zero. If "avatars.size" is not greater than zero at 706, method 700 ends at d712.

If "avatars.size" is greater than zero at 706, at 707, method 700 checks if all the tuple indices in the "avatars" property refer to an avatar node with the "MPEG_node_avatar" extension. An error is returned if the condition is not met, then method 700 ends at 712. If the condition is met, method 700 proceeds to step 708.

At 708, method 700 includes determining if "avatars.size" equals "mappings.size". If this condition is not met, method 700 ends at 712.

If the determining at 708 is true, at 709, method 700 includes parsing the "faceIndices" property (mandatory, error if not present), at 710, parsing the "barycentricCoords" property (mandatory, error if not present), and at 711, parsing the "projectionVectors" property (mandatory, error if not present) before ending at 712.

At 712, method 700 provides the result of the data found in the "MPEG_avatar_mapping" extension (if any) is stored in a dedicated structure. It should not change the scene.

Referring now to FIG. 4 presented above which illustrates a mapping between the joint skeletons of two avatars, Table 4 provides the semantic definition of mapping for skeletal attributes.

**Table 4 - Semantics definition of mapping for skeletal attributes**

| Name | Type | Defaults | Description |
|------|------|----------|-------------|
| joints | integer | N/A | Provides a reference to an accessor. The accessor points to a buffer containing the indices of the nodes representing the joints of the second avatar. |
| skinWeights | integer | N/A | Provides a reference to an accessor. The accessor points to a buffer holding the index of a vertex of the first avatar for each vertex of the second avatar. The skin joints and weights assigned to the vertices of the second avatar are the skin joints and weights associated with the vertices of the first avatar whose indices are provided in the buffer. |

Every joint of the mesh of the first element of the tuple in the "avatars" array, denoted as avatar_A, is mapped to a joint of the second element of the tuple in the "avatars" array, denoted as avatar_B. The mapping is described by the "joints" property in Table 4. The "joints" property is an accessor that points to a buffer. The $i^{th}$ element of the buffer is the index of the node of the scene description representing the joint of avatar_A to which the $i^{th}$ node of avatar_B is the closest. To describe joint correspondences between avatar body parts, a sparse accessor may be used to reference the subsets of the joints associated to the body parts.

The mapping of the joints of a first avatar denoted by avatar_A to the joints of a second avatar denoted by avatar_B is described below. It is assumed at this stage that the meshes of both avatars have been through the process of aligning their pose, either manually or automatically. Avatar_A is the avatar whose description is extended by the "MPEG_avatar_mapping" extension. The accessor referenced in "joints" refers to a buffer that contains the indices of the nodes representing the joints in avatar_B. Each joint index of avatar_A is represented as $j_i^A$ with $i = [0 ... N^A]$, where $N^A$ is the total number of joints of avatar_A. Each joint index of avatar_B is represented as $j_i^B$ with $i = [0 ... N^B]$, where $N^B$ is the total number of joints of avatar_B. The joints mapping process includes finding, for every joint $j_i^A$ of avatar_A, the nearest joint $j_i^B$ in the skeleton of avatar_B. This joint mapping may be encoded in the buffer pointed to by the "joints" accessor. This encoding allows the tracking of the transformation matrices of the joints of avatar_B and application of the equivalent relative transformation matrices in avatar_A, given that the pose and positions of avatar_A and avatar_B have been initially aligned. The mapping of joints between the skeletal representations of two avatars in order to determine the content of the buffer pointed to by the "joints" accessor may be performed manually by a human operator.

In the glTF description of a skeletal animation rig based on Linear Blend Skinning, each vertex of the mesh of an avatar is mapped to the joints of the avatar skeleton, such as, at most 4 joints, for example. The mapping is specified in a JOINTS_n attribute array associated to the mesh primitive representing the avatar mesh, where n is an integer number. The displacements of a vertex during an animation of the avatar are computed as a linear combination of the displacements of the joints to which the vertex is attached. For each vertex, the linear combination weights associated to the joints to which it is bound are described in the WEIGHTS_n attribute array associated to the mesh primitive representing the avatar mesh, where n is an integer number. The JOINTS_n and WEIGHTS_n attribute arrays are index-aligned.

With reference to the notations used above, each vertex of the mesh of avatar_B is assumed to have a corresponding vertex in the mesh of avatar_A that define its skinning weights. This corresponding vertex may be determined as the closest vertex to the corresponding location on avatar_A of the considered vertex of avatar_B. This corresponding location may be described using the geometrical mapping descriptors of Table 3. The corresponding vertex may also be determined by other means, including manually by a human operator. The "skinWeights" property of Table 4 is an accessor that points to a buffer holding the indices of such corresponding vertices in the mesh of avatar_A, for each vertex of avatar_B. Each such corresponding vertex in the mesh of avatar_A has associated joints and weights described by elements of the JOINTS_n and WEIGHTS_n attribute arrays of the mesh primitive representing avatar_A. Thus, the $i^{th}$ element of "skinWeights" provides, for the $i^{th}$ vertex of the mesh of avatar_B, the index of the corresponding vertex of the mesh of avatar_A. The joint weights associated to this corresponding vertex, specified in the WEIGHTS_n attribute arrays of the mesh primitive describing avatar_A, provide the corresponding joint weights for the considered ith vertex of the mesh of avatar_B.

The following example considers a glTF 2.0 format using the extension "MPEG_node_avatar" as an avatar representation:

```
{
...

  "generator": "Interdigital R&D France, Video Lab, MetaVideo, Interactive Media,
Immersive teleprescence",
    "version": "2.0"
  "extensions": {
    "MPEG_avatar_mapping": {
      "mappings":[{
        "faceIndices": 19,
        "barycentricCoords": 20,
        "projectionVectors": 21,
        "joints": 22,
        "skinWeights": 23
      }],
      "avatars": [(0, 1)]
    }
  },

  "bufferViews": [...],
  "buffers": [...],
  "images": [...],
  "materials": [...],
  "accessors": [...],
"meshes": [{
    "name": "avatar_A",
    "primitives": [{
     "attributes": {
      "POSITION": 0,
      "TEXCOORD_0": 2
     },
     "indices": 1,
     "material": 0
    }]
    },
    {
    "name": "avatar_B",
    "primitives": [{
      "attributes": {
        "POSITION": 3,
        "TEXCOORD_0": 5
      },
      "indices": 4,
      "material": 1
      }]
  }],

  "nodes": [
    {
      "mesh": 0,
      "extensions": {
      "MPEG_node_avatar": {
       "type": "urn:mpeg:sd:2023:avatar",
       "mappings": [
         {
           "path": "full body/upper_body/head",
           "node": 0
         }, ...
       ]
     }
    },
   },
   {
      "mesh": 1,
      "extensions": {
      "MPEG_node_avatar": {
       "type": "urn:avatar_B",
       "mappings": [
         {
           "path": "full_body/upper_body/head",
           "node": 1
         }, ...
       ]
     }
   }
  }
```

```
        }
    ]
```

In this example, there are two meshes and two avatar nodes represented by the "MPEG_node_avatar" format of glTF 2.0 MPEG extension. The "MPEG_avatar_mapping" extension described herein is at the root level. The node with index zero, i.e., the first node in the "nodes" array in the example, refers to avatar "A" and the mapped avatar is named as avatar "B" and referenced as node 1, i.e., the second node in the "nodes" array. Avatar B is the target avatar to be mapped onto avatar A. avatar B is the target avatar to be mapped onto the avatar A. The mapping is described by referencing specific accessors that contain the raw information that maps avatar A onto avatar B. In this example, the following accessor indices are used: 19 points to the buffer holding the correspondence mapping between the vertices of avatar A and the polygons of avatar B, 20 points to the buffer holding the barycentric coordinates of the projections of the vertex correspondences on the corresponding faces of the mesh of avatar B, as described above, 21 points to the buffer holding the components of the 3D vectors from the projections of the vertex correspondences on the corresponding faces of the mesh of avatar B to the vertex correspondence locations, as described above, 22 points to the buffer holding the mapping of the joints of avatar B to the joints of avatar A, and 23 points to the buffer holding the mapping of the vertices and skinning weights of avatar B with the vertices and skinning weights of avatar A.

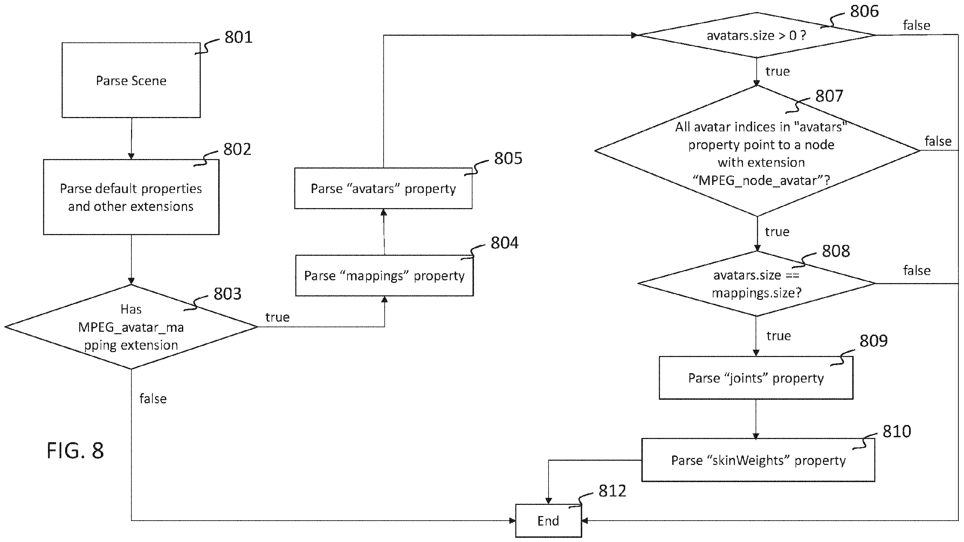

FIG. 8 illustrates a method 800 for parsing of the skeletal mappings of the MPEG_avatar_mapping extension. As an example of an avatar representation, for the following processing models, the "MPEG_node_avatar" extension of a node using glTF 2.0 format is used. Method 800 of FIG. 8 illustrates the parsing of a node with the support of the "MPEG_node_avatar" extension and the "MPEG_avatar_mapping" extension.

Method 800 begins with the parsing of a scene at 801. This process happens every time a scene is being processed in the glTF file. Method 800 continues at 802 with a parsing of the default properties and other extensions. The glTF loader first decodes the standard properties and possible extensions. At 803, method 800 includes determining if the "MPEG_avatar_mapping" is present, and if so the loader parses it, otherwise parsing ends at 812.

At 804, method 800 includes parsing the "mapping" property (mandatory, error if not present). At 805, method 800 parses the "avatars" property (mandatory, error if not present). At 806, method 800 includes determining if "avatars.size" is greater than zero. If "avatars.size" is not greater than zero at 806, method 800 ends at 812.

If "avatars.size" is greater than zero at 806, at 807, method 800 checks if all the tuple indices in the "avatars" property refer to an avatar node with the "MPEG_node_avatar" extension. An error is returned if the condition is not met, then method 800 ends at 812. If the condition is met, method 800 proceeds to 808.

At 808, method 800 includes determining if "avatars.size" equals "mappings.size". If this condition is not met, method 800 ends at 812.

If the determining at 808 is true, at 809, method 800 includes parsing the "joints" property (mandatory, error if not present), and at 810, parsing the "skinWeights" property (mandatory, error if not present) before ending at 812.

At 812, method 800 provides the result of the data found in the "MPEG_avatar_mapping" extension (if any) is stored in a dedicated structure. It should not change the scene.

For blendshape mapping, Table 5 is provided with the semantic definition of mapping for blendshape attributes.

**Table 5 - Semantics definition of mapping for blendshape attributes**

| Name | Type | Defaults | Description |
|------|------|----------|-------------|
| targets | integer | N/A | Provides a reference to an accessor. The accessor points to a buffer that that holds 4-tuples representing the mapping between a first morph target of a primitive of the mesh of a first avatar and a second morph target of a primitive of the mesh of a second avatar, such that the two morph targets describe the same semantic deformation of the avatar mesh. |

Morph targets, also known and referred to as blendshapes, are deformations of mesh primitives that are often associated to predetermined semantics. For example, a mesh primitive representing the face of an avatar with a neutral expression may be considered. Morph targets for this mesh primitive may represent deformations of the primitive that express specific emotions. There may be, for instance, a morph target associated with the deformation of the mesh corresponding to the expression of surprise, and another morph target associated with the deformation of the mesh corresponding to the expression of anger.

In glTF, a mesh representing an avatar may be represented as an array of primitives, each primitive representing a part of the avatar body. Each primitive may hold an array of morph targets representing deformations of the body part associated with the primitive. For example, the mesh of an avatar may be described by an array of two primitives, the first primitive representing the head of the avatar and the second primitive representing the rest of the body. The first primitive representing the head may have, for example, morph targets representing the deformation of the head under several emotions. The second primitive representing the body may have, for example, morph targets representing the deformation of the upper part of each arm when the biceps is contracted.

The "targets" property described in Table 5 defines mappings between morph targets associated to the mesh primitives representing the meshes of two avatars, denoted by avatar_A and avatar_B. Each such mapping associates a morph target of avatar_A to a morph target of avatar_B that has the same semantic meaning. For example, a mapping may associate a morph target of avatar_A and a morph target of avatar_B that both represent the expression of sadness on the face part of their meshes.

The "targets" property is the index of an accessor that points to a buffer. The buffer contains an array of 4-tuples. Each 4-tuple element of the array, denoted by $(p_1, b_1, p_2, b_2)$, describes a mapping between a first morph target of avatar_A and a second morph target of avatar_B such that the two morph targets have the same semantic meaning. In each 4-tuple, the first morph target is described by the index $p_1$ in the mesh representation of avatar_A of the primitive to which it is attached, and by the index $b_1$ of the morph target in the array of morph targets associated with the mesh primitive of avatar_A indexed by $p_1$. Similarly, the second morph target is described by the index $p_2$ in the mesh representation of avatar_B of the primitive to which it is attached, and by the index $b_2$ of the morph target in the array of morph targets associated with the mesh primitive of avatar_B indexed by $p_2$. From the description of blendshape mappings, an application may trigger semantically consistent animations in two different avatars described using two different representation formats.

The following example considers a glTF 2.0 format using the extension "MPEG_node_avatar" as an avatar representation:

```
        {
        ...

         "generator": "Interdigital R&D France,
  Video Lab, Meta Video, Interactive Media, Immersive
        teleprescence",
           "version": "2.0"
         "extensions": {
            "MPEG_avatar_mapping": {
             "mappings":[{
              "faceIndices": 19,
              "barycentricCoords":20,
              "projectionVectors": 21,
              "joints": 22,
              "skinWeights": 23,
              "targets": 24
             }],
              "avatars": [(0, 1)]
           }
         },

         "bufferViews": [...],
         "buffers": [...],
         "images": [...],
         "materials": [...],
         "accessors": [...],

        "meshes": [{
           "name": "avatar_A",
           "primitives": [{
            "attributes": {
             "POSITION": 0,
             "TEXCOORD_0": 2
            },
            "indices": 1,
            "material": 0
           }]
          },
          {
          "name": "avatar_B",
          "primitives": [{
             "attributes": {
               "POSITION": 3,
               "TEXCOORD_0": 5
             },
             "indices": 4,
             "material": 1
            }]
          }],
```

```
"nodes": [
  {
    "mesh": 0,
    "extensions": {
      "MPEG_node_avatar": {
        "type": "urn:mpeg:sd:2023:avatar",
        "mappings": [
          {
            "path": "full_body/upper_body/head",
            "node": 0
          }, ...
        ]
      }
    },
  },
  {
    "mesh": 1,
    "extensions": {
      "MPEG_node_avatar": {
        "type": "urn:avatar_B",
        "mappings": [
          {
            "path": "full_body/upper_body/head",
            "node": 1
          }, ...
        ]
      }
    }
  }
]
}
```

In this example, there are two meshes and two avatar nodes represented by the "MPEG_node_avatar" format of glTF 2.0 MPEG extension. The "MPEG_avatar_mapping" extension is at the root level. The node with index zero, i.e., the first node in the "nodes" array in the example, refers to avatar "A" and the mapped avatar is named as avatar "B" and referenced as node 1, i.e., the second node in the "nodes" array, avatar B is the target avatar to be mapped onto avatar A. The avatar B is the target avatar to be mapped onto the avatar A. The mapping is described by referencing specific accessors that contain the raw information that maps avatar A onto avatar B. In this example, the following accessor indices are used: 19 points to the buffer holding the correspondence mapping between the vertices of avatar A and the polygons of avatar B, 20 points to the buffer holding the barycentric coordinates of the projections of the vertex correspondences on the corresponding faces of the mesh of avatar B, as described above, 21 points to the buffer holding the components of the 3D vectors from the projections of the vertex correspondences on the corresponding faces of the mesh of avatar B to the vertex correspondence locations, as described above, 22 points to the buffer holding the mapping of the joints of avatar B to the joints of avatar A, 23 points to the buffer holding the mapping of the vertices and skinning weights of avatar B with the vertices and skinning weights of avatar A, and 24 points to the buffer holding the correspondence mapping between the morph targets of avatar A and the morph targets of avatar B.

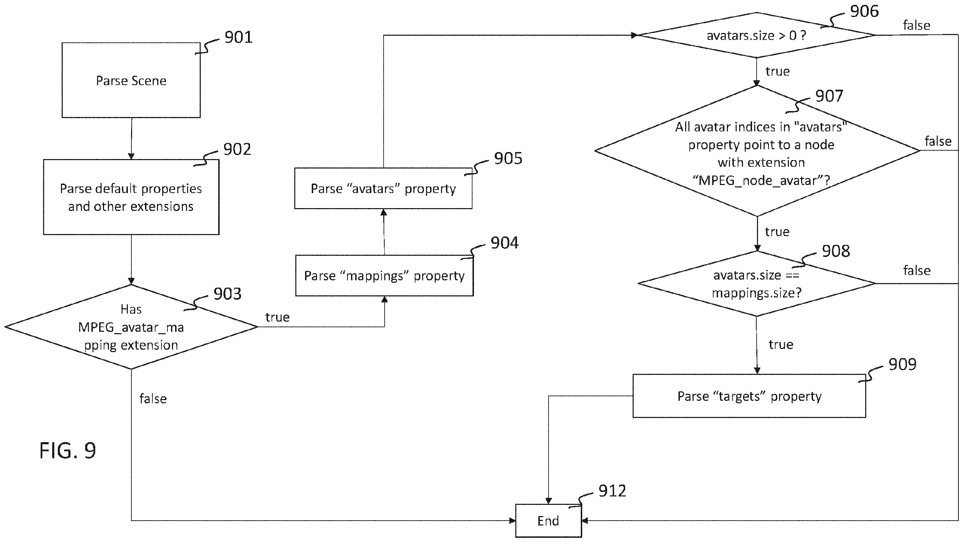

FIG. 9 illustrates a method 900 for parsing the blendshape attributes mappings of the MPEG_avatar_mapping extension. As an example of an avatar representation, for the following processing models, the "MPEG_node_avatar" extension of a node using glTF 2.0 format is used. Method 900 of FIG. 9 illustrates the parsing of a node with the support of the "MPEG_node_avatar" extension and the "MPEG_avatar_mapping" extension.

Method 900 begins with the parsing of a scene at 901. This process happens every time a scene is being processed in the glTF file. Method 900 continues at 902 with a parsing of the default properties and other extensions. The glTF loader first decodes the standard properties and possible extensions. At 903, method 900 includes determining if the "MPEG_avatar_mapping" is present, and if so the loader parses "MPEG_avatar_mapping", otherwise parsing ends at 912.

At 904, method 900 includes parsing the "mapping" property (mandatory, error if not present). At 905, method 900 parses the "avatars" property (mandatory, error if not present). At 906, method 900 includes determining if "avatars.size" is greater than zero. If "avatars.size" is not greater than zero at 906, method 900 ends at 912.

If "avatars.size" is greater than zero at 906, at 907, method 900 checks if all the tuple indices in the "avatars" property refer to an avatar node with the "MPEG_node_avatar" extension. An error is returned if the condition is not met, then method 900 ends at 912. If the condition is met, method 900 proceeds to step 908.

At 908, method 900 includes determining if "avatars.size" equals "mappings.size". If this condition is not met, method 900 ends at 912.

If the determining at 908 is true, at 909, method 900 includes parsing the "targets" property (mandatory, error if not present) before ending at 912.

At 912, method 900 provides the result of the data found in the "MPEG_avatar_mapping" extension (if any) is stored in a dedicated structure. It should not change the scene.

Keypoint mapping descriptors are provided. Table 6 provides the semantics definition of mapping for keypoint attributes.

**Table 6 -Semantics definition of mapping for keypoint attributes**

| Name | Type | Required | Description |
|------|------|----------|-------------|
| keypointsA | integer | Yes | Provides a reference to an accessor. The accessor contains the full description of the keypoints of avatar "A" that map to the keypoints of avatar "B" listed in "keypointsB". |
| keypointsB | integer | Yes | Provides a reference to an accessor. The accessor contains the full description of the keypoints of avatar "B" that map to the keypoints of avatar "A" listed in "keypointsA". |

Keypoints, aka landmarks, define anchor locations on the mesh of an avatar. Advantageously, keypoints are associated with body features that are semantically consistent across avatars. For instance, a keypoint may be defined at the location of the corner of the left eye or at the location of the extremity of the middle finger. These locations are unambiguously defined on every avatar and represent the same part of the body in all avatars. The "keypointsA" and "keypointsB" properties in Table 6 describe keypoints on the mesh of a first avatar denoted by avatar_A and keypoints on the mesh of a second avatar denoted by avatar_B, respectively.

"keypointsA" references an accessor that points to a buffer. The buffer contains an array of pairs of descriptors. Each pair of descriptors, denoted by $(f_i^A, (u_i^A, v_i^A, w_i^A))$, describes a keypoint on the mesh representing avatar_A. $f_i^A$ is the index in the array of faces of the mesh of avatar_A of the face on which the keypoint is located. It is encoded as an integer. $(u_i^A, v_i^A, w_i^A)$ are the barycentric coordinates of the keypoint inside the face, defined above. These coordinates are encoded as floating point numbers. This description assumes that the faces of the mesh representing avatar A are triangles, hence the barycentric coordinates of a point inside a face are defined by three coordinates. However, it is to be understood that the description can be generalized to meshes whose faces have an arbitrary number of vertices n. In this generalized case, the barycentric coordinates forming the second element of the pair representing a keypoint are described by a n-tuple of floating point numbers.

"keypointsB" references an accessor that points to a buffer. The buffer contains an array of pairs of descriptors. Each pair of descriptors, denoted by $(f_i^B, (u_i^B, v_i^B, w_i^B))$, describes a keypoint on the mesh representing avatar_B. $f_i^B$ is the index in the array of faces of the mesh of avatar_B of the face on which the keypoint is located. It is encoded as an integer. $(u_i^B, v_i^B, w_i^B)$ are the barycentric coordinates of the keypoint inside the face, defined herein. These coordinates are encoded as floating point numbers. As for "keypointsA", the provided description applies to triangular meshes but can be generalized in a straightforward way to polygons with an arbitrary number of vertices.

The buffers referenced by the "keypointsA" and "keypointsB" accessors have the same number of elements and are index-aligned, i.e., the keypoint of avatar_A described by the $i^{th}$ element of the "keypointsA" buffer maps to the keypoint of avatar_B described by the $i^{th}$ element of the "keypointsB" buffer.

The description of keypoint mappings between the meshes of two avatars may facilitate operations performed on the meshes. In particular, description of keypoint mappings may facilitate the determination of vertex correspondences between the two meshes, as keypoints mapped by the description provide ground truth correspondence anchors for computing the correspondences of their neighboring vertices.

The keypoint mapping between the meshes of two avatars may be determined manually by a human operator. Alternatively, some keypoints associated with distinguishing features of the mesh of an avatar may be determined by automatic keypoint detection and matching algorithms. These algorithms proceed in two stages. First, keypoints are independently detected on the mesh of avatar_A and the mesh of avatar_B. The detection may rely, for example, on vertex features such as the distribution of vertex normals in neighborhoods of each vertex. Vertices for which these features meet predetermined requirements are tagged as keypoints. Second, keypoints detected on either meshes are mapped to keypoints detected on the other mesh based on the similarity of their vertex features. For example, a keypoint detected on the mesh of avatar_A may be mapped to the keypoint detected on the mesh of avatar_B whose vertex feature is most similar, according to a predetermined metric in the space of vertex features, to its vertex feature.

The following example considers a glTF 2.0 format using the extension "MPEG_node_avatar" as an avatar representation:

```
{
  . . .
```

```
        "generator": "Interdigital R&D France,
Video Lab, Meta Video, Interactive Media, Immersive
        teleprescence",
            "version": "2.0"

        "extensions": {
            "MPEG_avatar_mapping": {
                "mappings":[{
                 "keypointsA": 19,
                 "keypointsB": 20
                }],
                "avatars": [(0, 1)]
            }
         },

        "bufferViews": [...],
        "buffers": [...],
        "images": [...],
        "materials": [...],
        "accessors": [...],

        "meshes": [{
            "name": "avatar_A",
            "primitives": [{
             "attributes": {
              "POSITION": 0,
              "TEXCOORD_0": 2
             },
             "indices": 1,
             "material": 0
            }]
            },
            {
            "name": "avatar_B",
            "primitives": [{
                "attributes": {
                    "POSITION": 3,
                    "TEXCOORD_0": 5
                },
                "indices": 4,
                "material": 1
                }]
            }],

        "nodes": [
            {
             "mesh": 0,
             "extensions": {
              "MPEG_node_avatar": {
               "type": "urn:mpeg:sd:2023:avatar",
               "mappings": [
                {
                   "path": "full_body/upper_body/head",
                   "node": 0
                }, ...
               ]
              }
             },
            },
            {
             "mesh": 1,
             "extensions": {
              "MPEG_node_avatar": {
               "type": "urn:avatar_B",
               "mappings": [
                {
                   "path": "full_body/upper_body/head",
                   "node": 1
                }, ...
               ]
              }
             }
            }
           ]
          }
```

In this example, there are two meshes and two avatar nodes represented by the "MPEG_node_avatar" format of glTF 2.0 MPEG extension. The "MPEG_avatar_mapping" extension is at the root level. The node with index zero, i.e., the first node in the "nodes" array in the example, refers to avatar "A" and the mapped avatar is named as avatar "B" and referenced as node 1, i.e., the second node in the "nodes" array, avatar B is the target avatar to be mapped onto avatar A. The avatar B is the target avatar to be mapped onto the avatar A. The mapping is described by referencing specific accessors that contain the raw information that maps avatar A onto avatar B. In this example, the following accessor indices are used: 19 points to the buffer holding the descriptors of the keypoints of avatar A and 20 points to the buffer holding the descriptors of the keypoints of avatar B.

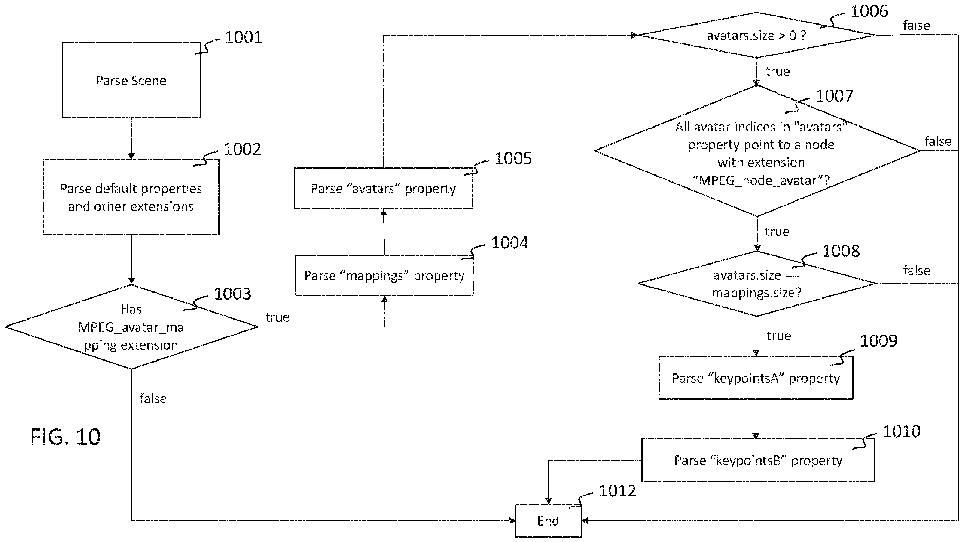

FIG. 10 illustrates a method 1000 for parsing the blendshape attributes mappings of the MPEG_avatar_mapping extension. As an example of an avatar representation, for the following processing models, the "MPEG_node_avatar" extension of a node using glTF 2.0 format is used. Method 1000 of FIG. 10 illustrates the parsing of a node with the support of the "MPEG_node_avatar" extension and the "MPEG_avatar_mapping" extension.

Method 1000 begins with the parsing of a scene at 1001. This process happens every time a scene is being processed in the glTF file. Method 1000 continues at 1002 with a parsing of the default properties and other extensions. The glTF loader first decodes the standard properties and possible extensions. At 1003, method 1000 includes determining if the "MPEG_avatar_mapping" is present, and if so the loader parses "MPEG_avatar_mapping", otherwise parsing ends at 1012.

At 1004, method 1000 includes parsing the "mapping" property (mandatory, error if not present). At 1005, method 1000 parses the "avatars" property (mandatory, error if not present). At 1006, method 1000 includes determining if "avatars.size" is greater than zero. If "avatars.size" is not greater than zero at 1006, method 1000 ends at 1012.

If "avatars.size" is greater than zero at 1006, at 1007, method 1000 checks if all the tuple indices in the "avatars" property refer to an avatar node with the "MPEG_node_avatar" extension. An error is returned if the condition is not met, then method 1000 ends at 1012. If the condition is met, method 1000 proceeds to step 1008.

At 1008, method 1000 includes determining if "avatars.size" equals "mappings.size". If this condition is not met, method 1000 ends at 1012.

If the determining at 1008 is true, at 1009, method 1000 includes parsing the "keypointsA" property (mandatory, error if not present), and at 1010, parsing the "keypointsB" property (mandatory, error if not present) before ending at 1012.

At 1012, method 1000 provides the result of the data found in the "MPEG_avatar_mapping" extension (if any) is stored in a dedicated structure. It should not change the scene.

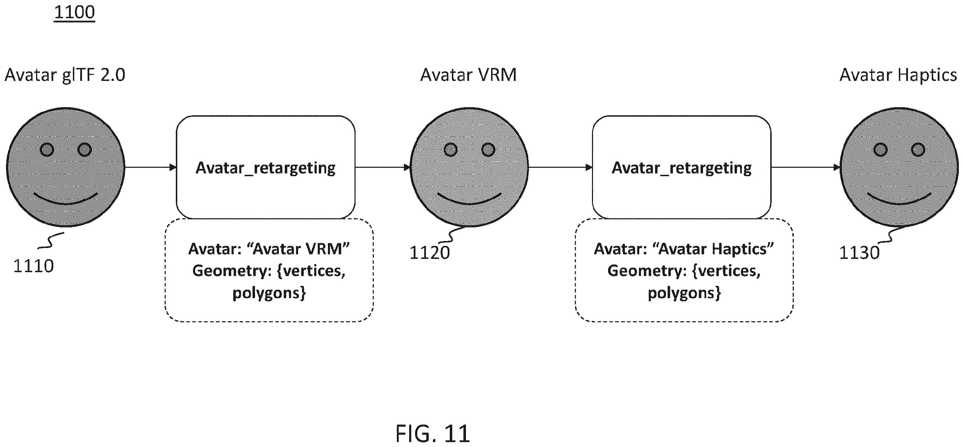

FIG. 11 illustrates the use of the "MPEG_avatar_mapping" extension 1100 in three different avatar representation formats 1110, 1120, 1130. The examples described herein allow for the translation of a first avatar representation format 1110 into a second avatar representation format 1120, for example.

In a first example, a first avatar described using a glTF 2.0 format 1110 is retargeted onto a second avatar described using the VRM format 1120. The retargeting may involve the mappings of vertices, joints, blendshapes and keypoints. This allows an application to determine the joint transformations and vertex displacements to be applied to the model of the second avatar in order to reproduce the animation of the first avatar, even though the two avatars are described in different representation formats. This feature is useful in animation situations where one scenario is to transfer joint transformation matrices from one avatar to another, creating a mirroring effect, i.e., both avatars perform the same type of motions.

In a second example, there is a mapping from the VRM avatar 1120 onto a Haptic avatar 1130, i.e., an avatar that is equipped with means for providing haptic feedback through physical sensors attached to the real person driving the avatar.

The examples described herein facilitate the translation of different avatar formats. The examples described herein improve the interoperability of immersive virtual environment platforms supporting the representation of users as avatars.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to V-PCC, G-PCC, P11, or V-DMC, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A system for avatar mapping using a generic registration schema, the system comprising:

   a first avatar representation including a first shape and a first semantics;
   a second avatar representation including a second shape and a second semantics; and
   a registration comprising a mapping of the first shape and the first semantics to the second shape and the second semantics configured to map the second avatar representation with the first avatar representation, the registration comprising one or more of a geometrical mapping, a skeletal mapping, a blendshape mapping and a keypoint mapping.

2. The system of claim 1 wherein the avatar mapping enables or improves at least one of motion retargeting, blendshape animation retargeting, semantical transfer of body parts annotations and attachment points of accessories.

3. The system of any of the above claims, wherein the registration comprises a correspondence from vertices of the first avatar representation to corresponding locations on a mesh of the second avatar representation.

4. The system of any of the above claims, wherein the registration comprising the geometrical mapping further comprises faceIndices, barycentricCoords and projectionVectors.

5. The system of any of the above claims, wherein the registration comprising the skeletal mapping further comprises joints and skinWeights.

6. The system of any of the above claims, wherein the registration comprising the blendshape mapping further comprises morph targets.

7. The system of any of the above claims, wherein the registration comprising the keypoint mapping further comprises keypointsA and keypointsB.

8. The system of any of the above claims, wherein the registration comprises the transfer of shape, animations or semantic information from the first avatar representation to the second avatar representation.

9. The system of any of the above claims, wherein a description of the mapping between the first avatar representation and the second avatar representation comprises an array of tuples containing two elements that refer to one or more indices of one or more nodes representing the first avatar and the second avatar in a scene description and comprises an array of mapping objects that describe one or more mapping elements of claims 3-7, such that the array of tuples and the array of mapping objects are index-aligned.

10. The system of any of the above claims, further comprising an avatars array [(0,1), (2,3)] and a mappings array [mapping_0, mapping_1].

11. The system of any of the above claims, wherein an avatars pair in a first tuple (0, 1) references an avatar with index 0 and an avatar with index 1.

12. The system of any of the above claims, wherein an avatars pair in a second tuple (2, 3) references an avatar with index 2 and an avatar with index 3.

13. The system of any of the above claims, wherein a corresponding mapping_0 first element of the mappings array provides the mapping from an avatar indexed with 0 to avatar indexed with 1.

14. The system of any of the above claims, wherein a corresponding mapping_1 second element of the mappings array provides the mapping from an avatar indexed with 2 to avatar indexed with 3.

15. The system of any of the above claims, further comprising bilateral mappings with an avatars array [(0,1), (1,0), (2,3), (3,2)] and a mappings array [mapping_0, mapping_1, mapping_2, mapping_3].

FIG. 2

EP 4 629 163 A1

FIG. 3

Mesh A  Mesh B

107

FIG. 4

FIG. 5

FIG. 6

701 Parse Scene

702 Parse default properties and other extensions

703 Has MPEG_avatar_mapping extension

704 Parse "mappings" property

705 Parse "avatars" property

706 avatars.size > 0 ?

707 All avatar indices in "avatars" property point to a node with extension "MPEG_node_avatar"?

708 avatars.size == mappings.size?

709 Parse "faceIndices" property

710 Parse "barycentricCoords" property

711 Parse "projectionVectors" property

712 End

FIG. 7

801 Parse Scene

802 Parse default properties and other extensions

803 Has MPEG_avatar_mapping extension

804 Parse "mappings" property

805 Parse "avatars" property

806 avatars.size > 0 ?

807 All avatar indices in "avatars" property point to a node with extension "MPEG_node_avatar"?

808 avatars.size == mappings.size?

809 Parse "joints" property

810 Parse "skinWeights" property

812 End

FIG. 8

901 Parse Scene

902 Parse default properties and other extensions

903 Has MPEG_avatar_mapping extension?
— true → 904 Parse "mappings" property → 905 Parse "avatars" property
— false → End (912)

906 avatars.size > 0 ?
— false → End
— true → 907 All avatar indices in "avatars" property point to a node with extension "MPEG_node_avatar"?
  — false → End
  — true → 908 avatars.size == mappings.size?
    — false → End
    — true → 909 Parse "targets" property → End (912)

FIG. 9

1001 — Parse Scene

1002 — Parse default properties and other extensions

1003 — Has MPEG_avatar_mapping extension

1004 — Parse "mappings" property

1005 — Parse "avatars" property

1006 — avatars.size > 0 ?

1007 — All avatar indices in "avatars" property point to a node with extension "MPEG_node_avatar"?

1008 — avatars.size == mappings.size?

1009 — Parse "keypointsA" property

1010 — Parse "keypointsB" property

1012 — End

FIG. 10

1100

Avatar glTF 2.0

Avatar_retargeting

Avatar: "Avatar VRM"
Geometry: {vertices, polygons}

1110

Avatar VRM

Avatar_retargeting

Avatar: "Avatar Haptics"
Geometry: {vertices, polygons}

1120

Avatar Haptics

1130

FIG. 11

EP 4 629 163 A1

Europäisches
Patentamt
European
Patent Office
Office européen
des brevets

# EUROPEAN SEARCH REPORT

**Application Number**

EP 24 30 5542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUDOVIC DUTREVE ET AL: "Feature points based facial animation retargeting", PROCEEDINGS OF THE 2008 ACM SYMPOSIUM ON VIRTUAL REALITY SOFTWARE AND TECHNOLOGY, VRST '08, ACM PRESS, NEW YORK, NEW YORK, USA, 27 October 2008 (2008-10-27), pages 197-200, XP058133341, DOI: 10.1145/1450579.1450621 ISBN: 978-1-59593-951-7 * the whole document * | 1-5,7-15 | INV. G06T3/14 |
| X | ALKAWAZ MOHAMMED HAZIM ET AL: "Blend Shape Interpolation and FACS for Realistic Avatar", 3D RESEARCH, 3D DISPLAY RESEARCH CENTER, HEIDELBERG, vol. 6, no. 1, 28 January 2015 (2015-01-28), pages 1-10, XP035474679, DOI: 10.1007/S13319-015-0038-7 [retrieved on 2015-01-28] * abstract; figures 1, 3-4; table 1 * * Section 3; page 3, paragraph 1 * * Section 3.2; page 4, paragraph 1 - paragraph 2 * * Section 4.1; page 5, paragraph 1 * | 1,6,8 | |
| X | ANASTASIOS YIANNAKIDES ET AL: "Real-time 3D human pose and motion reconstruction from monocular RGB videos", COMPUTER ANIMATION AND VIRTUAL WORLDS, JOHN WILEY & SONS LTD, GB, vol. 30, 22 May 2019 (2019-05-22), page n/a, XP072316319, ISSN: 1546-4261, DOI: 10.1002/CAV.1887 * abstract; figure 6 * | 1 | |

**TECHNICAL FIELDS SEARCHED (IPC)**

G06T
H04N

The present search report has been drawn up for all claims

| Place of search | Date of completion of the search | Examiner |
|---|---|---|
| Munich | 16 August 2024 | Yilmaz, Özgün |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)